(19) Europäisches Patentamt
European Patent Office
Office européen des brevets

(11) Publication number: **0 057 065**
**B1**

(12) **EUROPEAN PATENT SPECIFICATION**

(45) Date of publication of patent specification: **16.05.84**

(51) Int. Cl.$^3$: **C 08 J 5/22,** C 25 B 13/08,
C 08 F 259/08

(21) Application number: **82300191.2**

(22) Date of filing: **14.01.82**

(54) **Production of cation permselective membrane and electrolytic cell containing said membrane.**

(30) Priority: **27.01.81 GB 8102369**

(43) Date of publication of application:
**04.08.82 Bulletin 82/31**

(45) Publication of the grant of the patent:
**16.05.84 Bulletin 84/20**

(84) Designated Contracting States:
**DE GB**

(56) References cited:
**US-A-4 137 137**

**DESALINATION, vol. 24, 1978, pages 83-91, (Elsevier scientific publishing company), Amsterdam (NL); A. CHAPIRO et al.: "Synthesis of permeselective membranes by radiation induced grafting of hydrophilic monomers into polytetrafluoroethylene films"**

(73) Proprietor: **IMPERIAL CHEMICAL INDUSTRIES PLC**
**Imperial Chemical House Millbank**
**London SW1P 3JF (GB)**

(73) Proprietor: **ICI AUSTRALIA LIMITED**
**1 Nicholson Street**
**Melbourne Victoria 3001 (AU)**

(72) Inventor: **Moilliet, John Stewart**
**Firs Farmhouse Hill Road**
**Helsby Cheshire (GB)**
Inventor: **Markus, Michael Vojtech**
**9 Hillard Street**
**East Malvern 3145 Victoria (AU)**
Inventor: **Lindley, Andrew Arthur**
**78 The Brow Bates Lane**
**Helsby Cheshire (GB)**
Inventor: **Barnett, George Henry**
**16 Carrington Street**
**North Balwyn 3104 Victoria (AU)**

(74) Representative: **Walmsley, David Arthur Gregson et al**
**Imperial Chemical Industries PLC Legal department: Patents PO Box 6**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 057 065 B1

## Description

The present invention relates to a process for producing a cation permselective membrane, to the membrane so produced, and to use of the membrane in electrolytic cells, particularly to the use in chlor-alkali electrolytic cells. In particular, the invention relates to a process for improving the permselectivity of a cation-exchange membrane.

Chlor-alkali electrolytic cells are used to manufacture chlorine and alkali metal hydroxide solution by the electrolysis of an alkali metal chloride solution. Either mercury or diaphragm cells are generally used for this purpose. Mercury cells have the advantage of producing concentrated alkali metal hydroxide solutions substantially free of alkali metal chloride but give rise to propblems associated with the disposal of mercury-containing effluents. On the other hand, diaphragm cells, in which the anodes and cathodes are separated by porous diaphragms which permit the passage of positive and negative ions and of alkali metal chloride electrolyte, avoid the aforesaid effluent problem but suffer from the disadvantages that (1) relatively weak alkali metal hydroxide solutions are produced which must be evaporated to increase the concentration of the solution, (2) there is a possibility of the product gases, namely hydrogen and chlorine, becoming mixed, and (3) the alkali metal hydroxide solution which is produced is contaminated with a high concentration of alkali metal chloride and the solution must be purified in order to remove this alkali metal chloride.

Attempts have been made to overcome the disadvantages of both mercury cells and diaphragm cells by the use of cells in which the anodes and cathodes are separated by cation permselective membranes. Such membranes are selectively permeable and allow the passage of only positively charged ions, e.g. alkali metal ions, and inhibit the passage of bulk electrolyte and of negatively charged ions, e.g. hydroxyl ions.

Cation permselective membranes which have been proposed for use in chlor-alkali electrolytic cells include, for example, those made of fluorine-containing organic polymers and containing cation-exchange groups, for example sulphonate, carboxylate or phosphonate groups and/or their derivatives.

In chlor-alkali electrolytic cells membranes made of fluorine-containing polymers which will withstand cell conditions for long periods of time are preferred, for example the perfluorosulphonic acid-type membranes manufactured and sold by E. I. DuPont de Nemours and Company under the trade mark 'NAFION' and which are based upon cation-exchange resins which are hydrolysed copolymers of perfluoroolefins, for example tetra-fluoroethylene, and perfluorovinyl ethers containing sulphonic acid groups or derivatives thereof. Such membranes are described for example in U.S. Patents Nos. 2 636 851, 3 017 338, 3 496 077, 3 560 568, 2 967 807, and 3 282 875, and in U.K. Patent No. 1 184 321. Other membranes made of fluorine-containing polymers which may be used in chlor-alkali electrolytic cells are those manufactured and sold by Asahi Glass Company Ltd. under the trade mark 'FLEMION' and which are described for example in U.K. Patents Nos. 1 516 048, 1 522 877, 1 518 387 and 1 531 068.

Although such membranes have many desirable properties which make them attractive for use in the harsh chemical environment of a chlor-alkali cell, for example their good long-term chemical stability, the current efficiencies obtained in such cells may not be as high as is desired, especially when the alkali metal hydroxide is produced at high concentrations. As the alkali metal hydroxide concentration in the catholyte is increased the tendency of the hydroxyl ions to back-migrate from the catholyte to the anolyte may increase. This back-migration causes a drop in the current efficiency of the cell, the level of oxygen impurity in the chlorine increases, and there is an increase in the concentration of chlorate and hypochlorite contaminants in the alkali metal chloride solution, which contaminants must be removed and discarded to maintain acceptable cell operation. Current efficiencies of at least 90% are highly desirable.

The degree of back-migration of hydroxyl ions is related to the number and nature of the cation-exchange groups in the membrane. However there is a "trade-off" situation between the number and nature of cation-exchange groups, the voltage drop across the membrane, and the thickness of the membrane which is required to impart mechanical strength. Thus, in films thick enough to be used as membranes in chlor-alkali electrolytic cells and which have cation-exchange groups in number and nature such as to render the films highly impermeable to back-migration of hydroxyl ions, the voltage drop across the membrane is unacceptably high.

This has led to the development of multilayer membranes having a layer on the catholyte side which has a high degree of hydroxyl ion impermeability. The other layer(s), which provides the membrane with physical strength, is highly permeable to cations.

Such membranes have been made by lamination processes, or by chemical modification of the cation-exchange groups in the membrane, or by an impregnation process.

Laminated membranes are disclosed, for example, in U.S. Patent No. 3 909 378 and U.S. Patent No. 4 176 215. Laminated membranes possess the potential disadvantage of delamination in use because of the physical forces arising form differential swelling of the two layers of the laminated membrane whcih cause blistering and distortion of the membrane, particularly at high brine depletions.

British Patent No. 1485708 discloses the

chemical modification of the catholyte surface layer of a membrane having sulphonic acid groups by treating the membrane with ethylene diamine. The sulphonic acid groups to a depth of up to 75 microns are thereby converted into sulphonamide groups. Another method of chemically modifying sulphonic acid groups in a cation-exchange membrane is disclosed in Japanese patent publication No. 53 116 287 in which it is disclosed to convert the sulphonic acid groups to carboxylic acid groups. Such processes are complex and difficult to control to achieve surface layers of the desired thickness. Moreover the chemical stability of the membranes in the conditions prevailing in a chlor-alkali electrolytic cell may be adversely changed, particularly in the case of a membrane containing sulphonamide groups.

An impregnation process is described in Japanese Patent Publication No. 1979—038 286. The catholyte surface of a membrane is impregnated with monomers which are then polymerised to form a barrier to the passage of hydroxyl ions. The main disadvantage of this process lies in the susceptibility of the barrier polymer to leaching by the liquors in the cell as the polymer is only physically associated with the membrane substrate and is not chemically bound to it.

We have now found a process whereby the resistance of a cation permselective membrane comprising a fluorine-containing polymer to back-migration of hydroxyl ions in the electrolysis of alkali metal chloride solution is significantly increased by provision of a graft copolymer component in the membrane which is chemically bonded to the membrane.

The graft copolymer component comprises polymeric material resulting from the high energy radiation induced graft copolymerisation of a fluorine-containing ethylenically unsaturated tertiary alcohol monomer. 'Graft polymerisation' is defined in "Organic Chemistry of Synthetic High Polymers" by R. W. Lenz; Interscience Publishers 1967 251.

The present invention provides a process for producing a cation permselective membrane of improved resistance to back-migration of hydroxyl ions when the membrane is used in a chlor-alkali electrolytic cell, the process comprising irradiating a cation permselective membrane comprising a fluorine-containing polymer having cation-exchange groups with high energy radiation to generate free-radical sites therein and contacting the membrane with monomeric material comprising a fluorine-containing ethylenically unsaturated tertiary alcohol, or a derivative thereof, the monomeric material graft copolymerising with the fluorine-containing polymeric material to form a tertiary alcohol group-containing polymer chemically bonded to the membrane.

In a further embodiment the invention provides a cation permselective membrane of improved resistance to back-migration of hydroxyl ions when the membrane is used in a chlor-alkali electrolytic cell, the membrane comprising a fluorine-containing polymer having cation-exchange groups and, graft copolymerised to the membrane, a polymeric material formed from a monomeric material comprising a fluorine-containing ethylenically unsaturated tertiary alcohol, or a derivative thereof.

As the process of the invention leads to chemical bonding between the fluorine-containing polymer membrane and the tertiary-alcohol group-containing polymeric material the membrane is not susceptible to the problem of leaching out of the modifying polymer as is the case with prior art membranes in which a fluorine-containing polymer membrane is merely physically associated with a modifying polymer.

The fluorine-containing polymer having cation-exchange groups in the cation permselective membrane is preferably a perhalogenated polymer, and is more preferably a perfluorinated polymer on account of the resistance of such polymers to the corrosive environment prevailing in a chlor-alkali cell.

Suitable fluorine-containing polymers containing cation-exchange groups are described in the patents hereinbefore referred to. For example, the polymer may have the structure

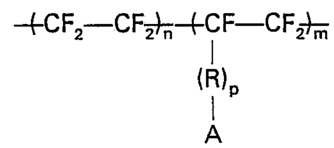

where n, m and p are integers, the group R is a divalent group which may for example have the structure

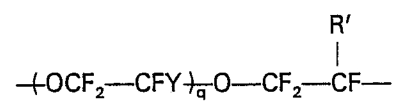

in which q is 1, 2 or 3, R′ is fluorine or perfluoroalkyl, and Y is fluorine or trifluoromethyl, and in which A is cation exchange group which may be, for example, sulphonic acid, carboxylic acid, phosphonic acid, or derivative thereof.

The fluorine-containing ethylenically unsaturated tertiary alcohol, or derivative thereof used in the process of the invention is preferably perhalogenated, and is more preferably perfluorinated on account of the resistance of graft copolymers derived therefrom to the corrosive environment prevailing in a chlor-alkali cell. The tertiary alcohol, or derivative thereof, is suitably aliphatic and may, for example, be represented by the general formula

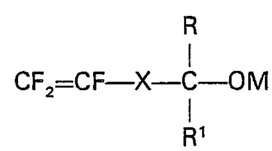

in which X represents $(CF_2)_a$ or $O—(CF_2)_b$ or

$$O—(CF_2—CF_2—O)_c—(CF_2)_d$$

when a is zero, one or more
b is zero, one or more
c is zero, one or more
d is zero, one or more
and R and $R^1$ are perfluoro alkyl groups containing not more than six carbon atoms, preferably not more than three carbon atoms, and M is hydrogen, metal cation or aliphatic ester.

Preferably neither 'a' nor 'b' exceeds 6 and neither 'c' nor 'd' exceeds 4.

The monomeric material may, in addition to comprising one or more fluorine-containing ethylenically unsaturated tertiary alcohols, or derivatives thereof, also comprise one or more additional ethylenically unsaturated monomers copolymerisable with the tertiary alcohol monomer and capable of being grafted to the cation permselective membrane. Such additional monomer may be an olefin.

Such additional monomers are preferably perhalogenated and are more preferably perfluorinated, for the reasons hereinbefore described. Examples of suitable ethylenically unsaturated monomers include

$CF_2 = CF_2$ tetrafluoroethylene
$CF_2 = CFCl$ chlorotrifluoroethylene
$CF_2 = CF—CF_3$ hexafluoropropylene

The cation permselective membrane for use in the process of the invention suitably is in the form of a thin film having a thickness of, for example, 0.1 to 3 mm, particularly 0.3 to 2 mm, and may have, for example, an ion-exchange capacity of 0.5 to 2.5 milli-equivalents of ion-exchange groups per gram of dry resin.

Graft copolymerisation reactions require high energies of initiation and the radiation used in the process of the present invention should have a wavelength of less than 100 Angstroms and an energy value of greater than 100 eV. Suitably the radiation used to initiate the graft copolymerisation is in the form of $\gamma$-rays, X-rays or electron beams; $\gamma$-rays are the preferred form.

There are several suitable techniques of radiation grafting which may be used in the process of this invention. For example, the membrane may be contacted with the monomeric material, suitably as a liquid form, with which it is to be graft copolymerised and subjected to continuous or intermittent irradiation, preferably in the absence of oxygen. Alternatively, but less preferably, the membrane may be pre-irradiated prior to contacting the membrane with the monomeric material.

The monomeric material which is contacted with the membrane may be a liquid per se, or it may be dissolved in a suitable solvent, for example methanol, toluene, 1,1,2-trichlorotrifluoroethane ($CFCl_2—CF_2Cl$) or water. The monomeric material which is contacted with the membrane may be in a gaseous monomer, e.g. tetrafluoroethylene may be dissolved in a suitable solvent or in a liquid co-monomer, e.g. in hexafluoro-2-trifluoromethyl-3-ene-2-ol.

The graft copolymerised tertiary alcohol group-containing polymeric material may be formed within the membrane, e.g. by soaking the membrane with the monomeric material. Alternatively the process of the invention may be used to form a layer of polymeric material on one or on both surfaces of the membrane, for example, where the membrane is in the form of a thin film. Preferably, a graft copolymerised layer of polymeric material is formed on one surface only of the membrane. In a chlor-alkali electrolytic cell the aforementioned surface layer preferably faces the cathode.

Suitably, a sufficient amount of graft copolymerisation is carried out to result in a weight increase of the membrane of at least 1%. In general the weight increase which is effected by graft copolymerisation will not exceed 25%.

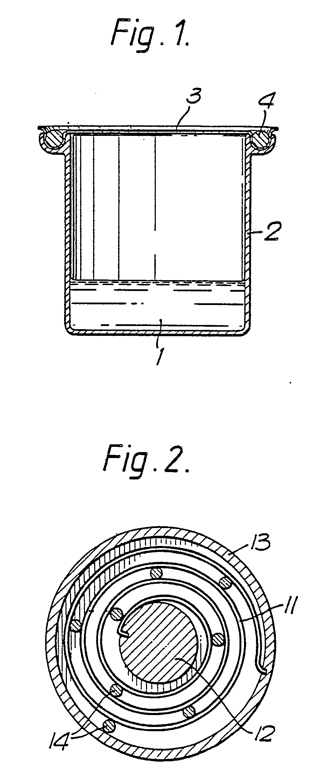

One method by which only one surface of a cation permselective membrane may be treated is now described with reference to Figure 1.

A sample 1 of the monomeric material in liquid form is contained in a vessel 2, having an open mouth at the top. The sample of membrane material 3 is stretched across the mouth and sealed on with a sealing ring 4. The monomeric liquid is vapourised and contacted with the membrane and this monomeric material in the vapour phase is graft copolymerised with one surface of the membrane under the influence of high energy radiation.

Alternatively, another method of single sided treatment is described with reference to Figure 2. Two strips of the cation permselective membrane 11 are placed together in continuous contact with each other. They are spirally wound on a spool 12 and placed in a hollow cylindrical container 13. For the sake of clarity the two strips are shown separately in Figure 2, but in practice they are contiguous with each other. The spiral windings are separated by spacers 14. The hollow cylinder, 13 containing the two membranes is filled with monomeric material in the form of a liquid or a vapour. The whole is subjected to irradiation to cause graft copolymerisation to take place on the exposed surface of each membrane. After treatment the membranes are removed from the container 13, unwound, and separated.

The improved membranes prepared by the process of the present invention are more effective in preventing back-migration of the hydroxyl ions from the catholyte compartment of a chlor-alkali electrolytic cell than are the precursor membranes from which they have been made. Hence under similar operating conditions in a chlor-alkali electrolytic cell they will exhibit a higher current efficiency. The improved membranes of this invention may also be usefully employed in other electrochemical

systems, for example, as separators and/or solid electrolytes in batteries, fuel cells and electrolysis cells other than chlor-alkali cells.

The invention is now illustrated by, but not limited to, the following examples in which all percentages and parts are percentages by weight and parts by weight unless otherwise stated.

Example 1

A film of 'NAFION' 390, a perfluorinated polymer containing sulphonic acid groups, was mounted in a device as is illustrated in Figure 1 whereby one surface of the film was exposed to the vapour from a liquid monomer 1 which in this example was hexafluoro-2-trifluoromethylbut-3-ene-2-ol.

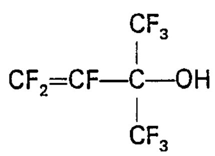

The whole assembly was exposed, in an oxygen free atmosphere, to $\gamma$-radiation from a $Co^{60}$ source at a dose rate of 6 krad/hour at 25°C. The total absorbed dose was 2.5 Mrad.

The film weight increased by 3.7%.

The treated film was conditioned by soaking in 30% w/w sodium hydroxide solution and the film mounted in an electrolysis test cell between a mild steel cathode and a titanium anode covered with a coating of a mixture of ruthenium dioxide and titanium dioxide, the treated surface of the membrane film being positioned facing the cathode. Saturated aqueous sodium chloride solution was charged to the anode compartment of the cell and water to the cathode compartment and the solution was electrolysed at a voltage of 3.6 volts and an anode current density of 3 Kamp.$m^2$ to produce 30% w/w sodium hydroxide solution in the cathode compartment and chlorine in the anode compartment.

The current efficiency (i.e. the weight of sodium hydroxide produced expressed as a percentage of the theoretical sodium hydroxide yield equivalent to the current passed) under steady operating conditions for three weeks was 90—95%. The current efficiency of cell operating under similar conditions with a membrane of untreated 'NAFION' 390 was 70% at 4.2 volts.

Example 2

The conditions of example 1 were repeated except that a temperature of 65°C was used in the radiation induced graft copolymerisation.

The weight increase of the film was 3.75%.

Examples 3 and 4

Samples of 'Nafion' 110 membranes were treated in the same manner as that described in example 1. At 20°C and 65°C respectively weight increases of 3.75% and 3.88% were achieved.

Example 5

A film of Nafion 390 as used in Example 1 was placed in a glass ampoule, the ampoule was charged with a mixture of hexafluoro-2-trifluoro-methylbut-3-ene-2-ol, potassium salt, 0.5 part of n-hexadecane inhibitor, and water, and the ampoule and contents were frozen in liquid nitrogen and evacuated. The contents of the ampoule were then melted, refrozen, and evacuated, gaseous tetrafluoroethylene was introduced into the ampoule, and the ampoule was sealed. The ampoule contained hexafluoro-2-trifluoromethylbut-3-ene-2-ol, tetrafluoroethylene, and water in a proportion by weight of 6.5:3.4:30.

The contents of the ampoule were melted and shaken and irradiated at 25°C with $Co^{60}$ $\gamma$-rays following the procedure of Example 1 at a dose rate of 3 krad/hour. The total absorbed dose was 0.5 MRad.

The film was removed from the ampoule, washed and dried. The film weight was found to have increased by 12.5%.

The film was then installed as a membrane in an electrolytic cell and aqueous sodium chloride solution was electrolysed following the procedure of Example 1. After 35 days electrolysis the voltage was 3.8 volts and the current efficiency was 79%.

By way of comparison after 35 days electrolysis with an untreated Nafion 390 membrane the voltage was 4.2 volts and the current efficiency was 74%.

Example 6

The procedure of Example 5 was repeated except that the ampoule was charged with hexafluoro-2-trifluoromethyl-3-ene-2-ol, tetrafluoroethylene and water in a proportion by weight of 6:3.5:30 and with 0.1 part of n-hexadecane. The weight increase of the membrane was 14%.

The electrolysis procedure of Example 1 was repeated using an electrolytic cell containing the above membrane.

After 35 days electrolysis the voltage was 3.8 volts and the current efficiency was 79%.

**Claims**

1. A process for producing a cation permselective membrane of improved resistance to back-migration of hydroxyl ions when the membrane is used in a chlor-alkali electrolytic cell, the process comprising irradiating a cation permselective membrane comprising a fluorine-containing polymer having cation exchange groups with high energy radiation to generate free-radical sites therein and contacting the membrane with monomeric material comprising a fluorine-containing ethylenically unsaturated tertiary alcohol, or derivative thereof,

the monomeric material graft copolymerising with the fluorine-containing polymer to form a tertiary alcohol group-containing polymer chemically bonded to the membrane.

2. A process as claimed in claim 1 in which the fluorine-containing polymer of the cation-exchange membrane is a perfluorinated polymer containing sulphonic, carboxylic, or phosphonic acid groups, or derivatives thereof.

3. A process as claimed in claim 1 or claim 2 in which there is used a perfluorinated ethylenically unsaturated tertiary alcohol.

4. A process as claimed in any one of claims 1 to 3 in which the fluorine-containing ethylenically unsaturated tertiary alcohol comprises hexafluoro-2-trifluoromethylbut-3-ene-2-ol.

5. A process as claimed in any one of claims 1 to 4 in which the monomeric material comprises a perfluorinated olefin.

6. A process as claimed in any one of claims 1 to 5 in which the cation exchange membrane is in the form of a thin film.

7. A process as claimed in any one of claims 1 to 6 in which the high energy radiation comprises $\gamma$-rays.

8. A process as claimed in any one of claims 1 to 7 in which the graft copolymerisation produces a weight increase of the membrane of at least 1 percent.

9. A cation permselective membrane produced by a process as claimed in any one of claims 1 to 8.

10. An electrolyte cell containing a cation permselective membrane as claimed in claim 9.

## Revendications

1. Procédé de production d'une membrane sélectivement perméable aux cations, douée d'une très bonne résistance à la rétro-migration d'ions hydroxyle lorsque la membrane est utilisée dans une cellule électrolytique produisant du chlore et un alcali, procédé consistant à irradier une membrane sélectivement perméable aux cations comprenant un polymère fluoré portant des groupes d'échange cationique avec une radiation de haute énergie pour y engendrer des sites à radicaux libres et à faire entrer la membrane en contact avec une matière monomérique comprenant un alcool tertiaire à non-saturation éthylénique contenant du fluor, ou un dérivé de cet alcool, la matière monomérique se copolymérisant par greffage avec le polymère contenant du fluor en formant un polymère contenant un groupe alcool tertiaire chimiquement lié à la membrane.

2. Procédé suivant la revendication 1, dans lequel le polymère contenant du fluor de la membrane d'échange cationique est un polymère perfluoré contenant des groupes acide sulfonique, acide carboxylique ou acide phosphonique, ou leurs dérivés.

3. Procédé suivant la revendication 1 ou la revendication 2, dans lequel on utilise un alcool tertiaire perfluoré à non-saturation éthylénique.

4. Procédé suivant l'une quelconque des revendications 1 à 3, dans lequel l'alcool tertiaire à non-saturation éthylénique contenant du fluor comprend l'hexafluoro-2-trifluorométhylbut-3-ène-2-ol.

5. Procédé suivant l'une quelconque des revendications 1 à 4, dans lequel la matière monomérique comprend une oléfine perfluorée.

6. Procédé suivant l'une quelconque des revendications 1 à 5, dans lequel la membrane d'échange cationique est sous la forme d'un mince film.

7. Procédé suivant l'une quelconque des revendications 1 à 6, dans lequel la radiation de haute énergie comprend des rayons gamma.

8. Procédé suivantl l'une quelconque des revendications 1 à 7, dans lequel la copolymérisation par greffage produit une élévation de poids de la membrane d'au moins 1%.

9. Membrane sélectivement perméable aux cations produite par un procédé suivant l'une quelconque des revendications 1 à 8.

10. Cellule électrolytique contenant une membrane sélectivement perméable aux cations suivant la revendication 9.

## Patentansprüche

1. Verfahren zur Herstellung einer Kationenaustauschermembrane mit verbesserter Widerstandsfähigkeit gegenüber Rückwanderung von Hydroxylionen, wenn die Membrane in einer Chloralkalielektrolysezelle verwendet wird, bei welchem Verfahren eine Kationenaustauschermembrane, welche ein fluorhaltiges Polymer mit Kationenaustauschgruppen enthält, mit hochenergetischer Strahlung bestrahlt wird, um radikalische Stellen zu erzeugen, und die Membrane mit einem monomeren Material, das einen fluorhaltigen, ethylenisch ungesättigten tertiären Alkohol oder ein Derivat davon enthält, in Berührung gebracht wird, wobei das monomere Material mit dem fluorhaltigen Polymer eine Pfropfcopolymerisation eingeht, un ein Polymer zu bilden, das eine tertiäre Alkoholgruppe enthält und chemisch mit der Membrane verbunden ist.

2. Verfahren nach Anspruch 1, bei welchem das fluorhaltige Polymer der Kationenaustauschermembrane aus einem Sulfon-, Carbon- oder Phosphonsäuregruppen enthaltenden perfluorierten Polymer oder einem Derivat davon besteht.

3. Verfahren nach Anspruch 1 oder 2, bei welchem ein perfluorierter ethylenisch ungesättigter tertiärer Alkohol verwendet wird.

4. Verfahren nach einem der Ansprüche 1 bis 3, bei welchem der fluorhaltige ethylenisch ungesättigte tertiäre Alkohol Hexafluoro-2-trifluoromethylbut-3-en-2-ol enthält.

5. Verfahren nach einem der Ansprüche 1 bis 4, bei welchem das monomere Material ein perfluoriertes Olefin enthält.

6. Verfahren nach einem der Ansprüche 1 bis 5, bei welchem die Kationenaustauschermembrane die Form eines dünnen Films aufweist.

7. Verfahren nach einem der Ansprüche 1 bis 6, bei welchem die hochenergetische Strahlung $\gamma$-Strahlen umfaßt.

8. Verfahren nach einem der Ansprüche 1 bis 7, bei welchem die Pfropfcopolymerisation eine Gewichtszunahme der Membrane von mindestens 1% ergibt.

9. Kationenaustauschermembrane, welche nach einem Verfahren der Ansprüche 1 bis 8 hergestellt worden ist.

10. Elektrolytische Zelle, welche eine Kationenaustauschermembrane nach Anspruch 9 enthält.

Fig. 1.

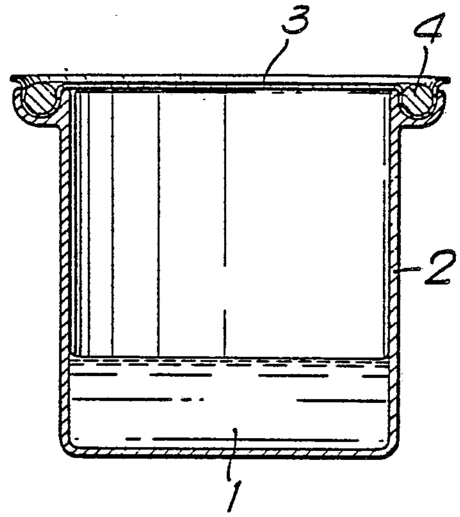


Fig. 2.